# FASCICULE DE BREVET EUROPEEN

(11) **EP 3 990 849 B1**
(45) Date de publication et mention de la délivrance du brevet: **29.03.2023**
(21) Numéro de dépôt: 20742809.5
(22) Date de dépôt: 16.06.2020
(51) Int. Cl.: F28F 3/12, H01M 10/6556, H01M 10/625, H01M 50/20, H01M 50/204, H01M 50/262, H01M 50/271, F28D 21/00, H01M 10/6557, H01M 10/613

(54) **DISPOSITIF REFROIDISSEUR D'UN OU PLUSIEURS MODULES DE STOCKAGE D'ENERGIE ELECTRIQUE**
VORRICHTUNG ZUM KÜHLEN EINES ODER MEHRERER STROMSPEICHERMODULE
DEVICE FOR COOLING ONE OR MORE ELECTRICAL POWER STORAGE MODULES

(30) Priorité: 28.06.2019 FR 1907191
(43) Date de publication de la demande: 04.05.2022
(73) Titulaire: VALEO SYSTEMES THERMIQUES, 78320 Le Mesnil Saint-Denis (FR)
(72) Inventeur: DJALLAL, Fethy, 72210 LA SUZE SUR SARTHE (FR); PERRIN, Thibaut, 72210 LA SUZE SUR SARTHE (FR); HERRY, Marc, 72210 LA SUZE SUR SARTHE (FR); IBRAHIMI, Mohamed, 72210 LA SUZE SUR SARTHE (FR)
(74) Mandataire: Valeo Systèmes Thermiques
(86) Numéro de dépôt international: PCT/FR2020/051039
(87) Numéro de publication internationale: WO 2020/260795

(56) Documents cités:
- WO-A1-2014/154883
- DE-A1-102014 217 728
- DE-U1-202017 107 884
- FR-A1- 2 861 894
- FR-A1- 3 075 344

## Description

La présente invention concerne un dispositif refroidisseur pour un ou plusieurs modules de stockage d'énergie électrique et notamment un dispositif refroidisseur à échangeur thermique comportant des plaques définissant un espace interne parcouru par un liquide de refroidissement.

### Domaine technique

Dans le domaine automobile il est connu d'utiliser de mettre en oeuvre des batteries électriques sous forme de modules de stockage d'énergie électrique. Chaque module peut comporter une pluralité de cellules de stockage d'énergie électrique reçues dans un boîtier. Les cellules de stockage d'énergie à haute densité telles que les batteries Li-ion ou Li-polymère ont idéalement besoin de fonctionner dans une plage de température entre 20°C et 40°C, et une température trop basse impacte leur autonomie alors qu'une température trop haute impacte leur durée de vie.

Il est connu de réguler la température des modules de stockage électrique, ci-après appelés modules de batteries, au moyen d'échangeurs thermiques à plaques en contact avec les modules et dans lesquels sont réalisés des canaux de circulation d'un liquide de refroidissement.

### Technique antérieure

Des exemples d'échangeurs à plaques utilisables pour refroidir des modules de batteries sont décrits dans le document DE10 2017 202 552 A1. Ces échangeurs comportent des embouts mâles d'entrée/sortie de liquide pour leur raccordement à un circuit externe. Ces embouts sont en général raccordés à des tuyauteries d'amenée et de retour de liquide de refroidissement.

WO-A-2014154883 divulgue un échangeur thermique selon le préambule de la revendication 1.

### Résumé

Pour augmenter la compacité des systèmes de batteries électriques de véhicules hybrides ou électriques et faciliter leur conception, les modules de batteries sont disposés dans des boîtiers regroupant en général plusieurs modules.

Dans ce cas, les échangeurs à plaques peuvent notamment être disposés entre un fond du boîtier et le ou les modules qu'il reçoit et le raccordement des échangeurs peut se faire sous l'échangeur au moyen des embouts dépassant des échangeurs.

Afin de réduire l'encombrement de ces systèmes, notamment dans un axe vertical par rapport au véhicule, il y a lieu de réduire au maximum la place que prennent les dispositifs de raccordement des échangeurs à plaques sous les échangeurs et l'épaisseur des circuits d'alimentation de ces échangeurs.

Dans ce but, la présente invention propose un échangeur thermique, comportant une première plaque formant une face dite face inférieure de l'échangeur et une seconde plaque formant une seconde face dite face supérieure de l'échangeur, les première et seconde plaques comportant entre elles des canaux de circulation de liquide de refroidissement formés dans une épaisseur de l'échangeur entre la première plaque et la seconde plaque, pour lequel la première plaque comporte au moins une embase tubulaire, de réception d'un embout de raccordement fluidique, s'étendant depuis une face externe de la première plaque vers l'intérieur de l'échangeur, la seconde plaque comportant au moins un bossage sur la face supérieure de l'échangeur produisant une cavité agrandissant localement l'épaisseur de l'échangeur sur la face interne de la seconde plaque, ladite cavité logeant ladite embase et constituant un passage fluidique entre une extrémité de ladite embase dans la cavité et au moins un canal de l'échangeur.

De cette façon, l'échangeur ne comporte pas d'embouts de connexion fragiles apparents et est plus compact.

Selon un mode de réalisation, l'échangeur comporte un premier bossage logeant une première embase tubulaire d'arrivée de liquide pour alimenter les canaux de l'échangeur et un second bossage logeant une seconde embase tubulaire de départ de liquide depuis les canaux de l'échangeur.

Les bossages logeant lesdites embases sont préférablement disposés en bordure de la plaque supérieure de l'échangeur en dehors d'une surface de contact de ladite plaque supérieure avec une surface d'échange thermique d'un module de stockage d'énergie électrique à refroidir.

Une extrémité de l'embase tubulaire côté intérieur de l'échangeur peut comporter un diamètre intérieur rétréci de rétention d'un joint torique.

Le joint torique peut en outre être logé dans une gorge de l'embout ou dans une gorge de l'embase.

La demande concerne en outre un dispositif qui comporte au moins un échangeur thermique selon l'un des modes de réalisation tel que décrit précédemment et un dispositif d'amenée et de retour de liquide de refroidissement pourvu d'embouts de raccordement fluidique tubulaires adaptés à s'enficher dans les embases tubulaires.

Le dispositif d'amenée et de retour de liquide est préférablement constitué de conduits intégrés dans l'épaisseur d'une paroi d'un boîtier de réception d'un ou plusieurs modules, les embouts en communication fluidique avec les conduits étant issus de ladite paroi.

Ce dispositif permet ainsi de minimiser la hauteur de l'ensemble boîtier/échangeur à plaque sous les modules.

La paroi et l'échangeur peuvent comporter des moyens de guidage en position de l'échangeur lors de son insertion dans le boîtier pour aligner les embouts et les embases lors de leur accouplement.

La demande concerne en outre un pack batterie comportant au moins un dispositif de refroidissement tel que décrit avec un boîtier et au moins un module de stockage d'énergie électrique reçu dans le boitier et posé sur ledit échangeur lui-même disposé sur une mousse compressible posée sur ladite paroi du boîtier et pour lequel les embouts d'amenée et de retour du liquide de refroidissement issus de ladite paroi, dépassent de l'épaisseur de la mousse et sont enfichés dans les embases de l'échangeur.

Dans cette configuration, le module de stockage d'énergie électrique est aisément appliqué sur l'échangeur en comprimant la mousse et la liaison fluidique ne prend pas de place en hauteur sous le module.

La paroi est préférablement une paroi de fond du boîtier, ledit boîtier comportant ladite paroi de fond, une paroi périphérique et un couvercle amovible.

Le ou les modules de stockage d'énergie électrique ou des sous-ensembles les comportant peuvent être pourvus d'ailes ou plaques de fixation, recevant des tiges de fixation du ou des modules de stockage d'énergie électrique dans le boîtier et surplombant lesdits bossages.

### Brève description des dessins

D'autres caractéristiques, détails et avantages apparaîtront à la lecture de la description détaillée ci-après, et à l'analyse des dessins annexés, sur lesquels :
[Fig. 1A] représente un échangeur en perspective de dessus ;
[Fig. 1B] représente l'échangeur de la figure 1A en perspective de dessous avec crevé ;
[Fig. 2] représente une vue en coupe d'un détail du raccordement d'un échangeur sur un conduit d'amenée de liquide ;
[Fig. 3] représente une vue en perspective coupe d'une partie d'assemblage d'un échangeur et d'un module de stockage d'énergie sur une paroi de boîtier ;
[Fig. 4] représente une vue en perspective coupe éclatée d'un pack batterie regroupant plusieurs échangeurs et plusieurs modules de stockage d'énergie selon la demande.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

La présente demande a trait à un système de refroidissement pour des modules de stockage d'énergie.

On appelle module de stockage d'énergie électrique un module comportant une ou plusieurs cellules de stockage d'électricité unitaires, ce module pouvant être partie d'un sous ensemble comportant un bâti de fixation, des câbles et une électronique de régulation.

Dans le cadre de la présente invention un ou plusieurs modules sont associés à un dispositif de refroidissement pour réaliser un pack batterie utilisable dans un véhicule électrique par exemple.

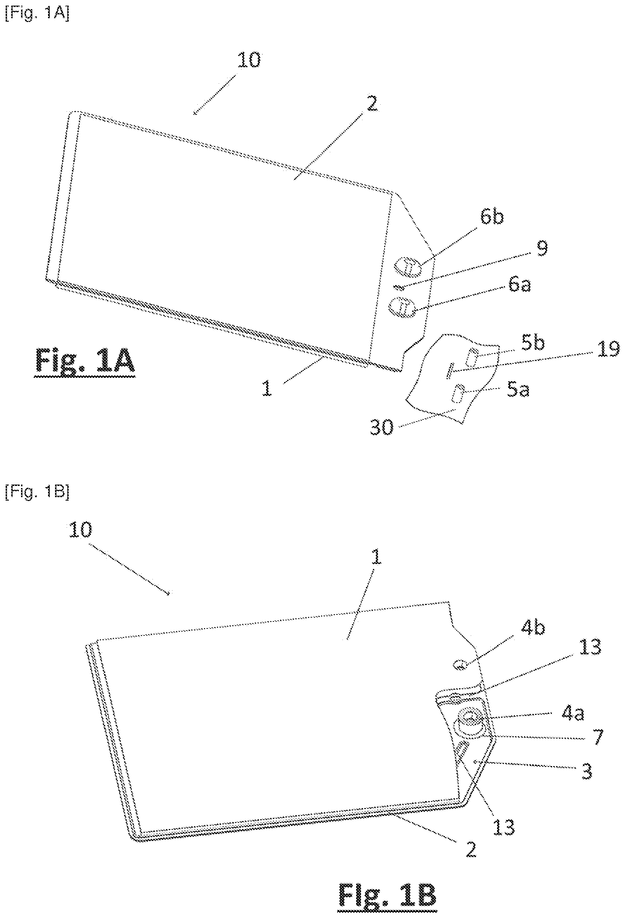

Le dispositif de refroidissement comporte un échangeur à plaque 10 tel que décrit aux figures 1A et 1B dans lequel des canaux 3 sont formés pour faire circuler un liquide de refroidissement.

L'échangeur 10 comporte une première plaque 1, que l'on appellera ici par convention plaque supérieure, généralement plane sur laquelle va être posé un module de stockage d'énergie électrique afin de pourvoir réguler la température de ce dernier. Sur la plaque 1 sont réalisés des bossages 6a, 6b.

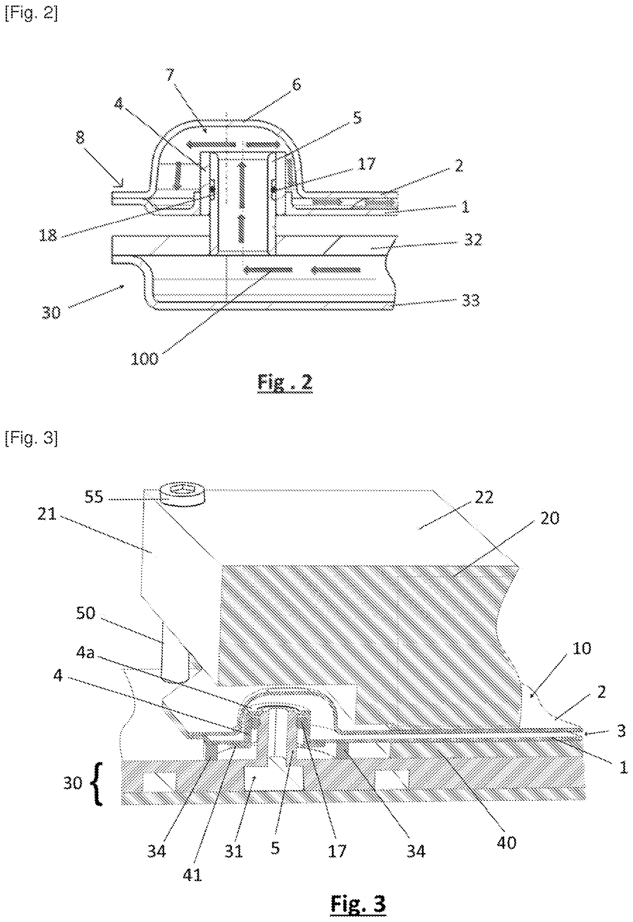

L'échangeur comporte une seconde plaque 2 que l'on appellera ici par convention plaque inférieure. Selon la figure 1B, la plaque inférieure 2 comporte des nervures embouties 13 qui se soudent sur face inférieure de la plaque supérieure et qui définissent les canaux 3 et comporte des embases tubulaires 4a, 4B en communication avec les canaux 3 et dont une extrémité affleurent la face externe de la plaque 2 alors que leur autre extrémité à l'intérieur de l'échangeur est située dans une cavité sous le bossage. Le crevé de la figure 2 permet de voir l'embase 4b dont l'extrémité à l'intérieur de l'échangeur se retrouve dans la cavité sous le bossage 6b de la figure 1 et l'embase 4a dont une face d'entrée se retrouve sur la face externe de la face inférieure 1 de l'échangeur. Les bossages et embases sont situés sur une extrémité de l'échangeur afin de libérer une surface importante pour recevoir le module de stockage d'énergie.

L'échangeur se raccorde à un dispositif d'amenée et de retour de liquide qui comporte des embouts s'enfonçant dans les embases tubulaires comme représenté en figure 2.

Selon cette figure, l'échangeur 10 est représenté en coupe au niveau du bossage 6 d'un circuit d'amenée de liquide. L'embout 5 est en communication avec un conduit 31 dans une paroi 30 ou une tubulure sous l'échangeur.

Le circuit 100 du liquide part du conduit 31, remonte dans l'embout 5 inséré dans l'embase 4, ressort dans la cavité 7 sous le bossage 6, redescend le long des parois extérieures de l'embase 4 pour être dirigé dans le canal 3 entre les plaques 1 et 2.

Un joint torique 17 disposé dans une gorge 18 de l'embase ou de l'embout réalise l'étanchéité entre l'embase et l'embout.

De manière traditionnelle les bords 8 des plaques referment l'échangeur et sont soudés ensemble.

Au niveau d'une embase de sortie de liquide, le circuit du liquide est inversé pour reparti dans un conduit de retour dans la paroi 30 ou une tubulure de sortie.

Pour positionner l'échangeur sur la paroi 30, l'échangeur et la paroi comportent des moyens complémentaires de guidage. Selon la figure 1A ces moyens peuvent être réalisés au moyen d'un doigt 19 fixé sur la paroi et qui s'insère dans un trou 9 réalisé dans l'échangeur à proximité des bossages. Eventuellement un second dispositif identique de l'autre côté de la plaque peut être réalisé afin d'aligner l'échangeur angulairement par rapport à la paroi. Les moyens de guidage peuvent aussi être réalisés au moyen de nervures à l'intérieur d'une paroi périphérique d'un boîtier recevant l'échangeur.

La figure 3 représente une coupe d'une extrémité d'un module de stockage d'énergie électrique 20 ou d'un sous ensemble comportant un tel module sur un échangeur 10 lui-même raccordé sur un embout 5 issu d'une paroi 30 pourvue d'un conduit 31. Dans cette configuration, le module de stockage d'énergie électrique 20 est monté dans un berceau 22 portant les câbles et l'électronique de commande du module et schématisé par son encombrement. Le berceau peut dans ce cas comporter les ailes 21 ou des plaques de fixation du module sur la paroi inférieure 30 au moyen de tiges 50 recevant des vis 55 traversant des trous réalisés dans les ailes ou plaques.

La paroi 30 est ici réalisée en deux parties plastiques ou composites longitudinales dans lesquelles sont ménagés les conduits 31.

Les ailes 21 se retrouvent au-dessus des bossages 6 ce qui réduit la place perdue pour les connexions fluidiques de l'échangeur.

Les canaux 3 entre la plaque supérieure 2 de l'échangeur 10 et la plaque inférieure 1 sont situés sous le fond du module de stockage d'énergie électrique ou le fond du sous ensemble le comprenant, la plaque supérieure 2 faisant contact avec ce fond.

L'échangeur 10 est posé sur une plaque de mousse 40 qui comprimée lors de la fixation du module maintient l'échangeur en contact avec le module pour assurer un transfert de chaleur optimal.

Les embouts 5 de la paroi 30, qui sont en communication avec des conduits 31 de cette paroi, sont enfichés dans les embases 4. Un joint torique 17, retenu par un rebord 4a constitué par une zone supérieure à diamètre rétréci de l'embase, assurant une étanchéité entre l'embout et l'embase. Le rebord peut en outre servir d'arrêt pour l'enfoncement de l'embout dans l'embase.

Selon cet exemple, les embases comportent une collerette 41 soudée sur la plaque inférieure 1. Sous la plaque inférieure, autour de la jonction entre les embouts et les embases est disposé un joint annulaire d'étanchéité supplémentaire 34 compressible.

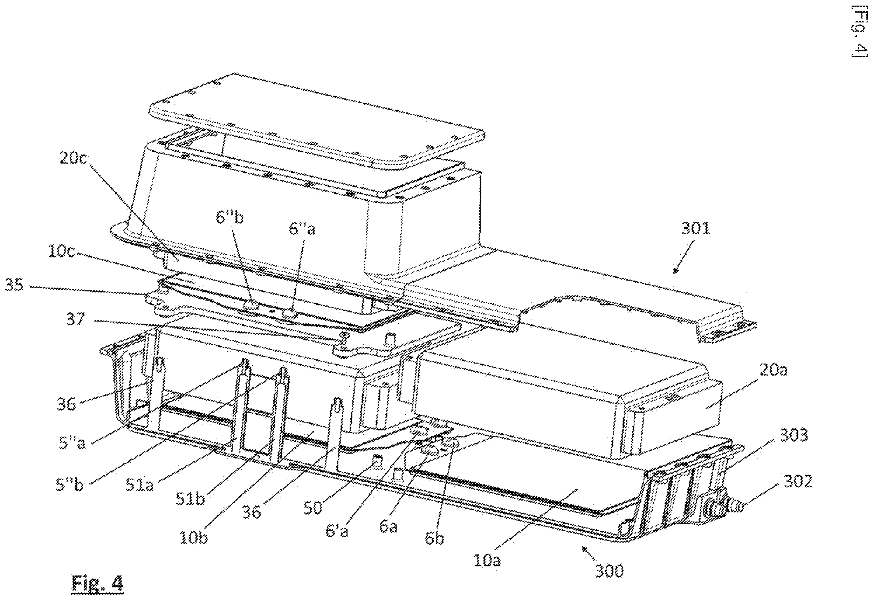

La figure 4 représente un pack batterie à trois modules de stockage d'énergie 20a, 20b, 20c, deux premiers modules 20a, 20b étant disposés dans le fond d'un boîtier 300 et un troisième module 20c étant disposé au-dessus de l'un des deux premiers modules.

Le boîtier comporte un fond 30 constituant une paroi munie de conduits d'amenée et de retour de liquide qui se raccordent à un circuit externe au moyen de connecteurs fluidiques 302. Le boîtier comporte en outre une paroi périphérique 303 et un capot 301 qui referme le boîtier.

Les premiers modules 20a, 20b sont fixés sur la paroi de fond au moyen d'entretoises 50 et positionnés chacun sur un échangeur 10a, 10b enfichés sur des embouts de raccordement dont les embouts 5'a, 5'b sont visibles sur le dessin. La géométrie des échangeurs au niveau du positionnement de leurs bossages 6a, 6b, 6'a, 6'b est déterminée pour permettre un raccordement des échangeurs à des conduits séparés ou identiques selon la configuration recherchée.

Le troisième module 20c, disposé au-dessus de l'un des modules 20a, 20b, est fixé sur une plaque support 35 elle-même fixée sur la paroi de fond au moyen de colonnes 36, issues de la paroi de fond ou rapportées sur cette dernière, et de vis 37 selon l'exemple représenté. La plaque support 35 reçoit un échangeur 10c dont les embases sous les bossages 6"a, 6"b reçoivent des embouts 5"a, 5"b montés en prolongements de colonnes tubulaires 51a, 51b issues du fond du boîtier et qui sont communication avec des conduits d'amenée et de retour dans la paroi de fond du boîtier comme pour les autres embouts.

Dans ce cas, les embases sont disposées sur un côté latéral de l'échangeur et non à une de ses extrémités longitudinales.

Le dispositif de l'invention qui n'est pas limité aux exemples représenté, le nombre de modules de stockage d'énergie pouvant être variable et différent de un ou de trois, permet ainsi de nombreux arrangements pour l'amenée et le retour du liquide de refroidissement aux échangeurs, une grande compacité des packs de batteries qui peuvent avoir plusieurs étages et la réalisation de packs de batteries compacts sans tubulures externes ou internes ce qui est notamment favorable en terme de poids et de facilité de montage.

## Revendications

1. Echangeur thermique (10), comportant une première plaque (1) formant une face dite face inférieure de l'échangeur et une seconde plaque (2) formant une seconde face dite face supérieure de l'échangeur, les première et seconde plaques comportant entre elles des canaux (3) de circulation de liquide de refroidissement formés dans une épaisseur de l'échangeur entre la première plaque et la seconde plaque, pour lequel la première plaque comporte au moins une embase (4) tubulaire, de réception d'un embout (5) de raccordement fluidique, **caractérisé en ce que** l'au moins une embase (4) tubulaire s'étend depuis une face externe de la première plaque vers l'intérieur de l'échangeur, la seconde plaque comportant au moins un bossage (6) sur la face supérieure de l'échangeur et produisant une cavité (7) agrandissant localement l'épaisseur de l'échangeur sur la face interne de la seconde plaque, ladite cavité logeant ladite embase et constituant un passage fluidique entre une extrémité (4a) de ladite embase dans la cavité et au moins un canal (3) de l'échangeur.

2. Echangeur thermique selon la revendication 1, comportant un premier bossage (6a) logeant une première embase tubulaire d'arrivée de liquide pour alimenter les canaux de l'échangeur et un second bossage (6b) logeant une seconde embase tubulaire de départ de liquide depuis les canaux de l'échangeur.

3. Echangeur thermique selon la revendication 2, pour lequel lesdits bossages logeant lesdites embases sont disposés en bordure de la plaque supérieure de l'échangeur en dehors d'une surface de contact de ladite plaque supérieure avec une surface d'échange thermique d'un module (20) de stockage d'énergie électrique à refroidir.

4. Echangeur thermique selon l'une quelconque des revendications précédentes, pour lequel l'extrémité (4a) de l'embase tubulaire côté intérieur de l'échangeur comporte un diamètre intérieur rétréci de rétention d'un joint torique (17).

5. Dispositif de refroidissement d'un ou plusieurs modules (20) de stockage d'énergie électrique, **caractérisé en ce qu'**il comporte au moins un échangeur thermique (10) selon l'une quelconque des revendications précédentes et un dispositif d'amenée et de retour de liquide de refroidissement pourvu d'embouts (5) de raccordement fluidique tubulaires adaptés à s'enficher dans les embases tubulaires.

6. Dispositif de refroidissement selon la revendication 5, pour lequel le dispositif d'amenée et de retour de liquide est constitué de conduits (31) intégrés dans l'épaisseur d'une paroi (30) d'un boîtier de réception d'un ou plusieurs desdits modules, les embouts (5) en communication fluidique avec les conduits étant issus de ladite paroi (30).

7. Dispositif de refroidissement selon la revendication 6, pour lequel la paroi et l'échangeur comportent des moyens de guidage en position (9, 19) de l'échangeur lors de son insertion dans le boîtier pour aligner les embouts et les embases lors de leur accouplement.

8. Pack batterie comportant au moins un dispositif de refroidissement selon la revendication 6 ou 7, et au moins un module (20) de stockage d'énergie électrique reçu dans le boitier et posé sur ledit échangeur (10) lui-même disposé sur une mousse (40) compressible posée sur ladite paroi du boîtier et pour lequel les embouts d'amenée et de retour du liquide de refroidissement issus de ladite paroi, dépassent de l'épaisseur de la mousse et sont enfichés dans les embases de l'échangeur.

9. Pack batterie selon la revendication 8, pour lequel ladite paroi est une paroi de fond du boîtier, ledit boîtier comportant ladite paroi de fond, une paroi périphérique et un couvercle amovible.

10. Pack batterie selon la revendication 8 ou 9, pour lequel le ou les modules de stockage d'énergie électrique ou des sous-ensembles les comportant sont pourvus d'ailes ou plaques de fixation, recevant des tiges (50) de fixation du ou des modules de stockage d'énergie électrique dans le boîtier et surplombant lesdits bossages.

## Patentansprüche

1. Wärmetauscher (10), aufweisend eine erste Platte (1), die eine Unterseite des Wärmetauschers bildet, und eine zweite Platte (2), die eine zweite Seite, die Oberseite des Wärmetauschers bildet, wobei die erste und zweite Platte zwischeneinander Kanäle (3) zur Zirkulation von Kühlflüssigkeit aufweisen, die in einer Dicke des Wärmetauschers zwischen der ersten und der zweiten Platte ausgebildet sind, wobei die erste Platte wenigstens einen röhrenförmigen Sockel (4) zur Aufnahme eines Ansatzstücks (5) zum Fluidanschluss aufweist, **dadurch gekennzeichnet, dass** sich der wenigstens eine röhrenförmige Sockel (4) von einer Außenseite der ersten Platte zum Inneren des Wärmetauschers erstreckt, wobei die zweite Platte wenigstens eine Erhebung (6) auf der Oberseite des Wärmetauschers aufweist und einen Hohlraum (7) herstellt, der die Dicke des Wärmetauschers auf der Innenseite der zweiten Platte lokal vergrößert, wobei der Hohlraum den Sockel aufnimmt und einen Fluiddurchgang zwischen einem Ende (4a) des Sockels in dem Hohlraum und wenigstens einem Kanal (3) des Wärmetauschers bildet.

2. Wärmetauscher nach Anspruch 1, aufweisend eine erste Erhebung (6a), die einen ersten röhrenförmigen Sockel zum Zulauf von Flüssigkeit aufnimmt, um die Kanäle des Wärmetauschers zu versorgen, und eine zweite Erhebung (6b), die einen zweiten röhrenförmigen Sockel zum Ablauf von Flüssigkeit aus den Kanälen des Wärmetauschers aufnimmt.

3. Wärmetauscher nach Anspruch 2, wobei die Erhebungen, die die Sockel aufnehmen, am Rand der oberen Platte des Wärmetauschers außerhalb einer Kontaktfläche der oberen Platte mit einer Wärmeaustauschfläche eines zu kühlenden Moduls (20) zur Speicherung elektrischer Energie angeordnet sind.

4. Wärmetauscher nach einem der vorhergehenden Ansprüche, wobei das Ende (4a) des röhrenförmigen Sockels auf der Innenseite des Wärmetauschers einen verkleinerten Innendurchmesser zur Aufnahme einer Ringdichtung (17) aufweist.

5. Vorrichtung zur Kühlung eines oder mehrerer Module (20) zur Speicherung elektrischer Energie, **dadurch gekennzeichnet, dass** sie wenigstens einen Wärmetauscher (10) nach einem der vorhergehenden Ansprüche und eine Vorrichtung zur Zu- und Rückleitung von Kühlflüssigkeit aufweist, die mit röhrenförmigen Ansatzstücken (5) zum Fluidanschluss versehen ist, die dafür geeignet sind, in die röhrenförmigen Sockel gesteckt zu werden.

6. Kühlvorrichtung nach Anspruch 5, wobei die Vorrichtung zur Zu- und Rückleitung von Flüssigkeit von Leitungen (31) gebildet ist, die in der Dicke einer Wand (30) eines Gehäuses zur Aufnahme eines oder mehrerer der Module integriert sind, wobei die Ansatzstücke (5), die mit den Leitungen in Fluidverbindung stehen, aus der Wand (30) kommen.

7. Kühlvorrichtung nach Anspruch 6, wobei die Wand und der Wärmetauscher Mittel zur Führung (9, 19) des Wärmetauschers in Position bei seinem Einsetzen in das Gehäuse aufweisen, um die Ansatzstücke und die Sockel bei ihrer Kopplung auszurichten.

8. Batteriepack aufweisend wenigstens eine Kühlvorrichtung nach Anspruch 6 oder 7 und wenigstens ein Modul (20) zur Speicherung elektrischer Energie, das im Gehäuse aufgenommen ist und auf den Wärmetauscher (10) aufgesetzt ist, der seinerseits auf einem zusammendrückbaren Schaumstoff (40) angeordnet ist, der auf die Wand des Gehäuses aufgesetzt ist und wobei die Ansatzstücke zur Zu- und Rückleitung der Kühlflüssigkeit, die aus der Wand kommen, von der Dicke des Schaumstoffs abstehen und in die Sockel des Wärmetauschers gesteckt sind.

9. Batteriepack nach Anspruch 8, wobei die Wand eine Bodenwand des Gehäuses ist, wobei das Gehäuse die Bodenwand, eine Umfangswand und einen abnehmbaren Deckel aufweist.

10. Batteriepack nach Anspruch 8 oder 9, wobei das oder die Module zur Speicherung elektrischer Energie oder Untereinheiten, die sie aufweisen, mit Befestigungsflügeln oder -platten versehen sind, die Stifte (50) zur Befestigung des oder der Module zur Speicherung elektrischer Energie im Gehäuse aufnehmen und über die Erhebungen hinausragen.

## Claims

1. Heat exchanger (10) having a first plate (1) forming a face known as the lower face of the exchanger and a second plate (2) forming a second face known as the upper face of the exchanger, the first and second plates having, between one another, coolant circulation channels (3) formed in a thickness of the exchanger between the first plate and the second plate, wherein the first plate has at least one tubular mount (4), for receiving an end fitting (5) for fluidic connection, **characterized in that** the at least one tubular mount (4) extends from an external face of the first plate toward the interior of the exchanger, the second plate having at least one boss (6) on the upper face of the exchanger and producing a cavity (7) that locally increases the thickness of the exchanger on the internal face of the second plate, said cavity accommodating said mount and constituting a fluidic passage between an end (4a) of said mount in the cavity and at least one channel (3) of the exchanger.

2. Heat exchanger according to Claim 1, having a first boss (6a) accommodating a first tubular mount for the inlet of liquid for supplying the channels of the exchanger and a second boss (6b) accommodating a second tubular mount for the outlet of liquid from the channels of the exchanger.

3. Heat exchanger according to Claim 2, wherein said bosses accommodating said mounts are disposed at the boundary of the upper plate of the exchanger away from a contact surface of said upper plate with a heat exchange surface of an electrical energy storage module (20) to be cooled.

4. Heat exchanger according to any one of the preceding claims, wherein the end (4a) of the tubular mount on the inner side of the exchanger has a narrowed inside diameter for retaining an O-ring (17).

5. Device for cooling one or more electrical energy storage modules (20), **characterized in that** it has at least one heat exchanger (10) according to any one of the preceding claims and a coolant supply and return device provided with tubular fluidic connection end fittings (5) designed to fit in the tubular mounts.

6. Cooling device according to Claim 5, wherein the liquid supply and return device is made up of ducts (31) integrated in the thickness of a wall (30) of a casing for receiving one or more of said modules, the end fittings (5) in fluidic communication with the ducts extending from said wall (30).

7. Cooling device according to Claim 6, wherein the wall and the exchanger have means (9, 19) for guiding the exchanger into position while it is being inserted into the casing in order to align the end fittings and the mounts during the coupling thereof.

8. Battery pack having at least one cooling device according to Claim 6 or 7 and at least one electrical energy storage module (20) received in the casing and placed on said exchanger (10), which itself is disposed on a compressible foam (40) placed on said wall of the casing, and wherein the coolant supply and return end fittings extending from said wall protrude beyond the thickness of the foam and are fitted in the mounts of the exchanger.

9. Battery pack according to Claim 8, wherein said wall is a bottom wall of the casing, said casing having said bottom wall, a peripheral wall and a removable cover.

10. Battery pack according to Claim 8 or 9, wherein the electrical energy storage module(s) or subassemblies comprising them are provided with fastening plates or fins, receiving rods (50) for fastening the electrical energy storage module(s) in the casing that are vertically above said bosses.
